# NEUE EUROPÄISCHE PATENTSCHRIFT

(11) **EP 2 553 386 B2**
(45) Veröffentlichungstag und Bekanntmachung des Hinweises auf die Entscheidung über den Einspruch: **19.03.2025**
(45) Hinweis auf die Patenterteilung: 25.10.2017
(21) Anmeldenummer: 11709710.5
(22) Anmeldetag: 21.03.2011
(51) Int. Cl.: G01B 21/04, G01D 5/347

(54) **MESSVERFAHREN FÜR EINE OBERFLÄCHENVERMESSENDE MESSMASCHINE**
MEASURING METHOD FOR A SURFACE MEASURING MACHINE
PROCÉDÉ DE MESURE POUR UNE MACHINE DE MESURE MESURANT LES SURFACES

(30) Priorität: 26.03.2010 EP 10157931
(43) Veröffentlichungstag der Anmeldung: 06.02.2013
(73) Patentinhaber: Leica Geosystems AG, 9435 Heerbrugg (CH)
(72) Erfinder: LIPPUNER, Heinz, 9445 Rebstein (CH); VOKINGER, Urs, 9434 Au (CH); SIERCKS, Knut, 9402 Mörschwil (CH)
(74) Vertreter: Kaminski Harmann
(86) Internationale Anmeldenummer: PCT/EP2011/054192
(87) Internationale Veröffentlichungsnummer: WO 2011/117171

(56) Entgegenhaltungen:
- EP-A1- 1 744 127
- EP-A1- 1 744 127
- EP-A1- 1 944 582
- EP-A1- 1 944 582
- EP-A2- 1 250 986
- EP-B1- 1 654 514
- DE-A1- 10 133 266
- DE-A1- 19 907 326
- US-A- 5 035 503
- US-B2- 6 957 496
- US-B2- 7 051 450

## Beschreibung

Die Erfindung betrifft ein Messverfahren für eine oberflächenvermessende Messmaschine nach dem Oberbegriff des Anspruchs 1, eine Verbindungsanordnung, insbesondere Kipp- oder Drehverbindung, für eine Messmaschine nach dem Oberbegriff des Anspruchs 6 und eine Koordinatenmessmaschine mit Gelenkarm nach Anspruch 12.

Messverfahren und -maschinen, wie beispielsweise Koordinatenmessgeräte oder -maschinen, z.B. mit Gelenkarm sind seit langem bekannt. Beispielsweise werden diese Geräte zum mit hoher Genauigkeit erfolgenden Vermessen von Objektoberflächen verwendet, insbesondere in der fertigenden Industrie, für die das Vermessen und Überprüfen von Werkstückoberflächen hohe Bedeutung hat.

Gattungsgemässe 3D-Koordinatenmess-Gelenkarme werden beispielsweise in US 5,402,582 oder EP 1 474 650 beschrieben. Vergleichbare Systeme, auch "Articulated Arm" oder "Portable CMM" genannt, werden z.B. von der Firma "Romer" unter den Produktnamen "Sigma", "Flex" oder "Omega" und der Firma "CimCore" unter den Produktnamen "Infinite" oder "Stinger" angeboten.

3D-Koordinatenmess-Gelenkarme besitzen eine in einem Referenzkoordinatensystem bekannt und fix positionierte Basis als ein Ende des Gelenkarms und ein gegenüberliegendes bewegliches Messende, an dem eine Messkomponente bzw. ein Messtaster angeordnet ist. Als Standardtaster kann eine taktile Probe verwendet werden, welche in Kontakt mit einem Messpunkt einer Objektoberfläche gebracht werden kann und beispielsweise aus einer Rubinkugel besteht, die auf einem Messstab montiert ist.

Alternativ dazu sind als Messkomponenten auch optische Sensoren bekannt, die beispielsweise als Punktmesseroder als Scanner, d.h. als eine Objektoberfläche kontinuierlich und z.B. linienweise abtastend, ausgeführt sein können. Im Speziellen können als solche optische Sensoren Triangulations-Sensoren oder interferometrische Messanordnungen verwendet werden. Des Weiteren wird beispielsweise in der Europäischen Patentanmeldung Nr. 07124101.2 die Verwendung einer Kamera als Messkomponente beschrieben, die zum Aufnehmen bzw. Erfassen einer Messobjektoberfläche ausgebildet und am beweglichen Ende eines Gelenkarms montiert ist. Anhand der Gelenkarm-Koordinatenmessmaschine kann eine Position und Ausrichtung der Kamera im Raum hochpräzise bestimmt werden.

Zwischen den beiden Enden des Gelenkarms sind mehrere zueinander schwenkbar und/oder verdrehbar sowie gegebenenfalls gegeneinander verschiebbar verbundene Glieder oder Armabschnitte angeordnet, sodass das Messende mit der Messkomponente, das auch als Tast-Glied bezeichnet wird, innerhalb eines Raumabschnitts frei bewegbar ist. Dazu sind die Glieder des Arms mittels Gelenken sowie gegebenenfalls mittels Aufhängungen, die eine Linearverschiebung ermöglichen, miteinander verbunden. Weiters sind den Gelenken bzw. Aufhängungen Lagemesseinrichtungen zugeordnet, sodass jeweils eine Stellung oder Orientierung der Glieder zueinander, also eine relative Lage jeweils zwischen den Gliedern, gemessen werden kann. Beispielsweise werden dafür Winkelmesser und/oder Längenmesser eingesetzt, die als Messgrössen Längen, Dreh-oder Schwenkwinkel ermitteln.

Aus der Kenntnis einer momentanen Messstellung der Glieder, d.h. der jeweiligen relativen Lagen der Glieder zueinander sowie eines der Glieder zur Basis, kann die Orientierung der einzelnen Armelemente und der Messkomponente relativ zur Basis in einem Referenzkoordinatensystem bestimmt werden. Das Bestimmen der Position der Messkomponente erfolgt im Allgemeinen durch eine Auswerteeinheit, welche diese durch die jeweiligen Lagemesseinrichtungen gemessen Messgrössen übermittelt bekommt und daraus die Position des Messkomponente ableitet. Zum Beispiel können dafür speziell für diese Anwendung programmierte Computer oder Recheneinheiten verwendet werden. Durch die über die Basis gewährleistbare Bezugnahme auf das externe Referenzkoordinatensystem können neben der Orientierung auch die Position der Armelemente und der Messkomponente, d.h. Ort und Ausrichtung im Raum, bestimmt werden.

Gattungsgemäss sind den Drehgelenken eines Gelenkarms jeweils optisch-elektronische Winkelmesser zugeordnet, anhand welcher jeweils eine relative Drehlage der beiden über das Gelenk verbundenen Glieder ermittelt wird. Das Gelenk besteht im allgemeinen aus den beiden miteinander drehbar verbundenen Arm-Gliedern, zwischen denen ein Drehgeber oder Winkelmesser angeordnet ist. Der optisch-elektronische Winkelmesser oder Drehgeber dient hierbei zum Messen einer momentanen relativen Drehlage seiner Drehlager-Komponenten zueinander, und damit mittelbar der beiden Arm-Glieder. Er weist hierfür einen Codeträger oder ein Codeelement, das an einem der beiden Arm-Glieder angeordnet ist, und eine Sensoranordnung auf, die entsprechend an dem anderen Arm-Glied angebracht ist.

Der Codeträger ist dabei nun derart im Drehgelenk gelagert, dass eine relative Rotationsbewegung des Codeträgers relativ zu der Sensoranordnung um eine Drehachse ermöglicht wird. Das gegenüber der Aufnahme eines ersten Arm-Gliedes rotierbare Element des zweiten Gelenkarm-Glieds, die Sensoranordnung sowie der darin gegeneinander der Sensoranordnung rotierbar gelagerte Codeträger können dabei als Drehlager-Komponenten bezeichnet werden.

Bei solchen opto-elektronischen Ausführungsformen werden Musterelemente als Code des Codeträgers optisch auf die Sensoranordnung aus einem oder mehreren Leseköpfen, z.B. CCD- oder CMOS-Zeilen- oder Flächensensoren, abgebildet, wie beispielsweise in der CH 658514 geoffenbart. Aus der Lage der Code-Projektion, insbesondere der projizierten Musterelemente, auf der Sensoranordnung bzw. deren Leseköpfe kann auf den relativen Drehwinkel des Codeträgers als Drehkörper gegenüber der Sensoranordnung geschlossen werden. Hierbei dient ein Detektorzentrum als Bezugsgrösse, wobei im Idealfall ohne mechanische Exzentrizitätsfehler sowohl Detektorzentrum, der Drehpunkt als auch das Zentrum der Musterelemente auf der Drehachse liegen.

Über solche Verfahren und Vorrichtungen ist es bei entsprechenden Vorkehrungen sogar möglich mit einer Messgenauigkeit in der Grössenordnung einiger weniger Winkelsekunden einen Vollkreis in über eine Million Einheiten aufzulösen.

Um derartig hohe Genauigkeiten erreichen zu können, muss einerseits die Sensoranordnung lagestabil zum Lager angeordnet sein. Andererseits ist eine hohe Mass- und Formhaltigkeit des Codeträgers, insbesondere die Anordnung und Ausbildung des Codeelements auf dem Codeträger - mit in Drehrichtung hintereinander um ein Musterzentrum angeordneten Musterelementen - eine zwingende Voraussetzung. Neben partiellen Teilungsungenauigkeiten, die auf Abweichungen der vorgegebenen Abstände zwischen einzelnen hintereinander angeordneten Musterelemente und/oder auf Abweichungen der Abmessungen der Musterelemente selbst zurückzuführen sind, verunmöglicht in der Praxis oft eine Beabstandung des Musterzentrums von der Drehachse, eine so genannte Exzentrizität, ein Erreichen geforderter Genauigkeiten. Aufgrund nur schwer vermeidbarer und in der Praxis stets gegebener Fertigungstoleranzen weist jeder Codeträger eine Exzentrizität auf. Rundlaufabweichungen des Lagers bzw. ein Lagerspiel können zudem einen Beitrag zur Exzentrizität liefern. Wirken beim Bestimmen der Tastposition bzw. der Drehwinkel auf die Drehgelenke des Gelenkarms nennenswerte Belastungen durch Kräfte, so können abhängig von den Belastungen ebenso dauerhafte oder temporäre Exzentrizitäten sowie andersartige Lageänderungen des Codeträgers gegenüber der Aufnahme des Drehgelenks auftreten.

Verfahren und Vorrichtungen zur Bestimmung des Drehwinkels und Herauskalibrierung solcher unerwünschten Lageänderungen gegenüber der Idealposition, beispielsweise durch Belastungen auf das Drehgelenk oder durch Lagerfehler und/oder Rundlaufabweichungen, werden unter anderem in der Europäischen Patentanmeldung Nr. 07100296.8 sowie den Veröffentlichungen EP 1,632,754 A1, US 7,051,450 B2 und US 7,069,664 B2 beschrieben.

Dabei ist aus der EP 1,632,754 A1 ein Verfahren zur Messung der aktuellen Exzentrizität eines Drehgebers bekannt, bei dem wenigstens ein Teil einer Vielzahl um ein Musterzentrum angeordneter Musterelemente über optische Strahlen auf einem optischen Detektor abgebildet wird. Die Musterelemente sind auf einem Codeträger angeordnet, der mit dem Detektor um die Drehachse rotierbar verbunden ist.

Über die Detektorelemente ein und desselben Detektors werden Positionen der abgebildeten Musterelemente aufgelöst. In einem ersten Schritt werden über aufgelöste Positionen wenigstens eines Musterelements Auswirkungen einer Exzentrizität des Musterzentrums zur Achse auf das Bestimmen eines Drehwinkels rechnerisch ermittelt. In einem zweiten Schritt wird unter Berücksichtigung der ermittelten Auswirkungen der Drehwinkel über die aufgelösten Positionen hintereinander angeordneter Musterelemente genau bestimmt.

In einer Weiterbindung dieses Verfahrens werden bei dem ersten Schritt über einen Zwischenschritt hintereinander angeordnete Musterelemente zu wenigstens zwei Gruppen zusammengefasst und über die aufgelösten Einzelpositionen der jeweils zusammengefassten Musterelemente wenigstens zwei Gruppenpositionen rechnerisch ermittelt. Über die wenigstens zwei ermittelten Gruppenpositionen werden dann Auswirkungen der Exzentrizität auf das Bestimmen des Drehwinkels rechnerisch ermittelt. Über die ermittelten Gruppenpositionen kann dies mit höherer Genauigkeit erfolgen.

In der Internationalen Patentanmeldung WO 2008/083797 wird beschrieben, zum Bestimmen eines Exzentrizitätsfehlers für einen Drehwinkel um eine Achse anhand von aufgelösten Positionen von auf eine Sensoranordnung projizierten Musterelementen in einem ersten Schritt für eine Vielzahl von Messungen die Exzentrizität des Musterzentrums zum Detektorzentrum rechnerisch zu ermitteln. In einem zweiten Schritt kann durch Aggregatbildung, d.h. durch Zusammenfassung und Verknüpfung, aus der Vielzahl von Messwerten wenigsten eine Einflussgrösse abgetrennt bzw. bestimmt werden. Je nach Ansatz werden die Einflussgrössen entweder bestimmt oder aber unterdrückt, z.B. durch herausmitteln. Bestimmte Einflussgrössen können dann entweder algorithmisch oder aber zur direkten Korrektur der Exzentrizität verwendet werden, z.B. zur mechanischen Korrektur der Achslage durch Stellelemente oder elektronisch durch Anpassung.

Des Weiteren wird darin erläutert, dass - neben den Einflussgrössen, die zu einem direkten Exzentrizitätsbeitrag in der Ebene der Sensoranordnung führen, wie z.B. der translatorischen Verschiebung der Lagerwelle - mit geeigneten Winkelmessköpfen auch die Bewegung in der Richtung der Drehachse ermittelt werden kann. Durch die Abstandsänderung des Codeelements zur Sensoranordnung ändert sich der Projektionsmassstab des Codes. Diese Änderung des Projektionsmassstabes kann als Mass für die Abstandsänderung bzw. die Position in axialer Richtung verwendet werden. Werden für zwei Detektorelemente die Abstände zur Codescheibe als Codeelement bestimmt, so kann auch die Verkippung der Achse bestimmt werden.

US 7,051,450 B2 und US 7,069,664 B2 offenbaren eine Koordinatenmessmaschine (CMM) mit Gelenkarm, der zwischen einer Basis des Arms und einem am anderen Arm-Ende angeordneten Messkomponente mehrere Drehgelenke aufweist. Zum Messen einer Messposition der Messkomponente sind den Drehgelenken jeweils Winkelmesser mit einer Sensoranordnung aus mindestens zwei Leseköpfen und einem dazu rotierbar angeordnetem Codeelement zugeordnet.

Dabei ist aufgezeigt, dass die mindestens zwei Leseköpfe derart miteinander kooperieren, dass ein durch Belastungen des Drehgelenks verursachter Fehler bei der Drehwinkelmessung verringert wird.

Beispielsweise sind dazu zwei in Umfangsrichtung um 180°, drei um jeweils 120° oder alternativ vier um jeweils 90° versetzte Leseköpfe vorgesehen.

Wie bereits oben angedeutet ist also bei diesen Verfahren bzw. Vorrichtungen des Standes der Technik stets ein Berücksichtigen, Eliminieren, Herauskalibrieren oder Kompensieren von Fehlern, die die Winkelmessung beeinflussen, ausschliesslich für das Bestimmen des Drehwinkels vorgesehen. Als Fehler werden z.B. Taumelfehler durch eine Neigung der Rotationsachse, Exzentrizitätsfehler durch Fertigungstoleranzen oder ein Lagerspiel sowie weitere Fehler, die beispielsweise durch Belastungen des Drehgelenks hervorgerufen werden, berücksichtigt. Eine eigene Bestimmung und Quantifizierung der Einflussgrössen und deren Weiterverarbeitung ausserhalb des Drehgebers erfolgt nicht.

Jedoch entstehen bei Koordinatenmessmaschinen mit einem Drehgelenke aufweisenden Gelenkarm durch die beschriebenen Fehlereinflüsse wie Belastungen der Drehgelenke - über ein fehlerhaftes Bestimmen der Winkellage hinaus - weitere Fehler im Rahmen der Bestimmung der Messposition der Messkomponente. Nämlich treten in der Praxis - über die eigentlich durch das Drehgelenk vorgesehene Rotation hinaus - weitere Lageänderungen des Codeträgers gegenüber der Aufnahme auf, insbesondere Axialverschiebungen, Radialverschiebungen oder Verkippungen, welche verschiedene Ursachen haben können. Zwar handelt es sich dabei um minimale Lageänderungen, dennoch führen diese bei den inzwischen geforderten Genauigkeiten für die Positionsbestimmung zu nennenswerten Fehlern.

Eine Aufgabe der Erfindung ist daher das Bereitstellen eines verbesserten Messverfahrens für eine oberflächenvermessende Messmaschine, insbesondere für eine Koordinatenmessmaschine mit Dreh- oder Kippgelenke aufweisendem Gelenkarm, zum Bestimmen der Messposition einer Messkomponente.

Eine weitere Aufgabe ist das Bereitstellen einer verbesserten Koordinatenmessmaschine mit einem Drehgelenke als Verbindungsanordnungen aufweisenden Gelenkarm. Insbesondere soll dabei unter geringem Hardware-Modifikationsaufwand seitens des Gelenkarms ein Bestimmen der Messkomponente-Messposition mit höherer Genauigkeit ermöglicht werden.

Diese Aufgaben werden durch ein Verfahren gemäß Anspruch 1 und eine Anordnung gemäß Anspruch 8 gelöst. Merkmale, die die Erfindung in alternativer oder vorteilhafter Weise weiterbilden, sind den abhängigen Patentansprüchen zu entnehmen.

Das erfindungsgemässe Messverfahren für eine oberflächenvermessende Messmaschine, z.B. für eine Koordinatenmessmaschine mit Drehgelenke aufweisendem Gelenkarm zum Bestimmen einer Messposition einer Messkomponente, löst sich von Verfahren des Standes der Technik, bei welchen stets lediglich im Rahmen des Bestimmens einer Winkelstellung des Dreh-oder Kippgelenks ein Berücksichtigen oder Kompensieren von Fehlereinflüssen - wie z.B. durch Belastung bedingte Verschiebungen oder Verkippungen der Drehachse - vorgesehen sind, wobei die Arm-Glieder als Verbindungselemente von der Basis bis zur Messkomponente als unbeeinflusst betrachtet werden. Hingegen werden gemäss der Erfindung solche Lageänderungen des in einer Aufnahme rotierbar gelagerten Codeträgers eines Drehgelenks gegenüber der zugeordneten Sensoranordnung explizit bestimmt und als zusätzliche Messgrössen, die die Messstellung der Arm-Glieder des Gelenkarms beschreiben, zum Ableiten der Messposition der Messkomponente relativ zu einer Basis verwendet. Dies bedeutet, dass eine im Dreh- oder Kippgelenk als Verbindungsanordnung beispielsweise durch Belastungen hervorgerufene Lageänderung der beiden über das Drehgelenk verbundenen Arm-Glieder - die über eine Drehlage-Änderung hinaus geht - in ihrem Ausmass bestimmt und bei der Ermittlung der relativen Lage der beiden Arm-Glieder zueinander berücksichtigt wird. Ebenso kann erfindungsgemäss aus diesen Lagewerten auf Verformungen oder Grössenänderungen von Komponenten geschlossen werden.

Das Bestimmen der Lageänderungen entsprechend
- einer Verschiebung des Codeträgers gegenüber der Sensoranordnung in radialer Richtung relativ zur Drehachse,
- einer Verschiebung des Codeträgers gegenüber der Sensoranordnung in Richtung der Drehachse und
- einer Verkippung des Codeträgers gegenüber der Aufnahme,
bzw. von mit diesen Lageänderungen verbundenen Lageänderungs-Grössen erfolgt anhand einer optischelektronischen Lagemesseinrichtung zwischen dem Codeträger und der Sensoranordnung, insbesondere anhand eines ohnehin bereits dem Drehgelenk zugeordneten optisch-elektronischen Winkelmessers.

Dazu weist die Lagemesseinrichtung einen Code, der an einem der Drehgelenk-Komponenten - nämlich direkt oder über eine eigene Komponente - aufgebracht ist, und eine Sensoranordnung aus mindestens einem Lesekopf auf. Die Sensoranordnung ist dabei an der jeweils anderen Drehgelenk-Komponente angeordnet und erfasst eine anhand des Codeträgers erzeugte Code-Projektion. Als Code-Projektion ist dabei eine Projektion mindestens eines Teiles eines optisch erfassbaren Codes, den das Codeelement aufweist, zu verstehen. Als Codeträger dient eine eigene Codescheibe, die mit einem der Gelenkarm-Glieder verbunden ist. Alternativ zum Gegenstand der Erfindung kann sich aber auch der Code direkt auf einem der Arm-Glieder befinden, so dass diese strukturell als Codeträger dient.

Gattungsgemässe Codeträger und Sensoranordnungen, wobei anhand einer ausgelesenen Code-Projektion die beschriebenen Lageänderungen des Codes relativ zur Sensoranordnung ermittelt werden können, sind aus dem Stand der Technik hinlänglich bekannt. Allerdings werden diese Lageänderungen gemäss Vorrichtungen und Verfahren des Standes der Technik lediglich zur Kalibrierung und somit Verbesserung einer Winkelmessung verwendet. Nicht jedoch werden dabei die aus der Code-Projektion abgeleiteten Verschiebungen oder Verkippungen zum Beschreiben der dreidimensionalen relativen Stellung der Komponenten des Drehgelenks zueinander verwendet. Somit wird im Rahmen bisheriger Messpositionsbestimmungen bei Gelenkarmen stets von der idealistischen Annahme ausgegangen, dass das Drehgelenk ausschliesslich eine relative Drehbewegung der Drehgelenk-Komponenten gegeneinander - also eine Bewegung mit einem Freiheitsgrad - erlaubt.

Erfindungsgemäss wird nunmehr für den Drehgeber anhand der Code-Projektion ein Lagewert für die weiteren Freiheitsgrade des Codeträgers relativ zu der ihm zugeordneten Sensoranordnung ermittelt und beim Bestimmen der aktuellen Messposition der Messkomponente bzw. des Tasters berücksichtigt, wobei aus dem Lagewert eine relative Lage des Verbindungselementes gegenüber der damit verbundenen Aufnahme bzw. dessen Deformation bestimmt werden. Dies bedeutet, dass erfindungsgemäss die über die Rotation hinausgehenden Lageveränderungen des Codeträgers mit der Lage bzw. Orientierung und einer möglichen Deformation eines Verbindungselementes der Messmaschine, z.B. eines Armelementes, in Beziehung gesetzt wird.

Die Bestimmung der Messposition kann hierbei sowohl auch modellbasierten Ansätzen beruhen, bei denen die geometrischen und materialabhängigen Grössen der Verbindungselemente, wie z.B. deren Länge und Eigen- oder ein wirkendes Fremdgewicht, berücksichtigt werden, als auch eine auf Kalibrierungen basierende Lösung verwendet werden, bei der bekannten Positionen und Orientierungen entsprechende Lagewerte zugeordnet werden, die ihrerseits wieder eine Basis für eine beschreibende Funktion liefern können oder aber auch in Look-up-Tabellen abgelegt werden können. Naturgemäss können diese Ansätze jedoch auch kombiniert werden, z.B. indem auf Basis einer Modellierung zusätzliche Kalibrierungen in ausgewählten Messpositionen erfolgen. Zudem können auch durch andere Sensoren, wie z.B. Temperatursensoren, bestimmte Grössen im Modell ergänzende Verwendung finden.

Durch die erfindungsgemässe Verwendung der ermittelten Lageänderungen zum Beschreiben der exakten relativen Stellung der Drehgeber- bzw. Verbindungsanordnungs-Komponenten zueinander und somit als weitere Messgrössen, die die relative Stellung der Gelenkarm-Glieder angebenden und beim Berechnen der Messposition des Tasters relativ zur Basis berücksichtigt werden, wird unter geringem Hardware-Modifikationsaufwand seitens des Gelenkarms ein Bestimmen der Messkomponenten-Messposition mit höherer Genauigkeit ermöglicht.

Beispielsweise wird erfindungsgemäss eine auftretende Verkippung des Codeträgers eines Drehgelenks um die eigentliche Rotationsachse in ihrem Ausmass erfasst und direkt als aktuelle relative Messstellung der über das Drehgelenk verbundenen Glieder zueinander berücksichtigt und somit bei der Bestimmung der Messposition des Tasters miteinbezogen.

Bei modellbasierten Ansätzen kann je nach Ausführung des Verbindungselementes dieses als starr oder aber als in Grenzen deformierbar betrachtet werden. Dementsprechend kann jegliche Veränderung als nur im Gelenk bzw. der Verbindungsanordnung auftretend betrachtet werden oder aber es wird auch eine Veränderung der Komponenten betrachtet. So ist es modellierbar, dass je nach Anordnung von Drehgeberachse und Achse des Verbindungselementes und in Kenntnis des Eigengewichtes des Verbindungselementes sowie in Abhängigkeit von der Orientierung benachbarter Verbindungselemente bzw. Arm-Glieder auch eine Aufteilung in lagebedingte und deformationsbedingte Anteile erfolgt. So sind bei Anbringung des Drehgebers auf der Längsachse des Verbindungselementes und dessen senkrechter Position die Durchbiegung und damit Deformation sowie auch lastbedingte Verkippungen des Codeträgers gegenüber der Sensoranordnung minimal, wobei in hängender und in stehender Position des Armgliedes entgegengesetzte Längsverschiebungen, d.h. Translationen in axialer Richtung, auftreten. Damit sind auch Deformationen der einzelnen Komponenten einer Messmaschine identifizierbar und in ihrer Auswirkung bestimmbar.

Insbesondere bei auswechselbaren Messkomponenten kann durch deren unterschiedlichen Gewichte auch eine entsprechend abweichende Beeinflussung der Verbindungsanordnungen erfolgen, die durch den erfindungsgemässen Absatz bestimmbar ist.

Hierbei ist auch zu berücksichtigen, dass bei den hier erforderlichen hochpräzisen Anwendungen bereits thermisch bedingte Veränderungen, wie z.B. Längen- oder Radiusänderungen, Auswirkungen auf die Messposition bedingen, die ebenfalls durch den erfindungsgemässen Ansatz berücksichtigt bzw. erkannt werden können.

Die Sensoranordnung der Lagemesseinrichtung kann insbesondere aus mindestes zwei Leseköpfen bestehen. Beispielsweise sind als Sensoranordnung zwei Leseköpfe um 90° in Umfangsrichtung versetzt angeordnet oder alternativ drei Leseköpfe mit einem Versatz von jeweils 60°. Die Leseköpfe können dabei in bekannter Weise z.B. als Zeilensensoren mit einer Vielzahl von aneinander gereihten Detektorelementen ausgebildet sein.

Als Codeelement bzw. Codeträger wird eine Codescheibe mit einem optisch auslesbaren Code verwendet, im Durchlichtverfahren. Dabei kann der Code eine Vielzahl von in Umfangsrichtung hintereinander angeordneter Musterelemente aufweisen, wobei die Gesamtheit der Musterelemente sowohl einen inkrementellen als auch einen absoluten Code darstellen kann. Alternativ zum Gegenstand der Erfindung kann sich der Code jedoch auch auf anderen Träger befinden, z.B. auf der Stirnfläche von Gehäusekomponenten, die dann bspw. im Auflichtverfahren beleuchtet werden können.

Vorzugsweise kann gemäss der Erfindung als die Lagemesseinrichtung ein optisch-elektronischer Drehgeber, wie er in einigen Drehgelenken von Gelenkarmen aus dem Stand der Technik bereits ohnehin vorhanden ist, verwendet werden. Insbesondere kann jedoch auch dem Drehgelenk - zusätzlich zum nach dem Stand der Technik ausgebildeten und dem Drehgelenk zugeordneten Winkelencoder ein weiterer Drehgeber oder eine andere funktional ähnliche Form der Kombination von Codeträger und Sensoranordnung als eine optisch-elektronische Lagemesseinrichtung vorgesehen sein, wobei diese speziell zum Erfassen der Lageänderungen des Codeträgers relativ zur Sensoranordnung dient.

Wie bereits oben beschrieben, werden dabei folgende Lageänderungen des Codeträgers gegenüber der Aufnahme - und somit eines ersten, den Codeträger darstellenden Arm-Glieds relativ zu einem zweiten, die Aufnahme aufweisenden Arm-Glied - ermittelt und beim Ableiten der exakten Relativstellung der Glieder zueinander berücksichtigt:
- eine Verschiebung des Codeträgers gegenüber der Sensoranordnung in - bezüglich der Drehachse - radialer Richtung,
- eine Verschiebung des Codeträgers gegenüber der Sensoranordnung in - bezüglich der Drehachseaxialer Richtung und
- eine Verkippung des Codeträgers relativ zur Sensoranordnung.

Als damit verknüpfte Lageänderungs-Grössen können zum Beispiel
- eine Radial-Verschiebungs-Richtung (RR) und ein Radial-Verschiebungs-Ausmass (Δr),
- ein Axial-Verschiebungs-Ausmass (Δh) und
- eine Verkippungs-Richtung und ein Verkippungs-Winkel (Δκ) bestimmt werden. Die Lageänderungs-Grössen werden - neben den weiteren Armstellungs-Messgrössen, die die Messstellung der Arm-Glieder bezeichnen - zueinander in Bezug gesetzt, woraus die Messposition der Messkomponente relativ zur Basis abgeleitet wird.

Die gemäss der Erfindung ausgebildete Koordinatenmessmaschine weist dafür eine Auswerteeinheit auf, durch die das Miteinander-Verknüpfen der durch einzelne Gliederstellungsmesser erfassten Armstellungs-Messgrössen - darunter erfindungsgemäss auch die Lageänderungs-Grössen bezüglich des mindestens einen Drehgelenks - und daraus das Ableiten der Messposition der Messkomponente erfolgt.

Das erfindungsgemässe Messverfahren und die erfindungsgemässe Verbindungsanordnung sowie eine erfindungsgemässe Koordinatenmessmaschine sowie nicht unter die Erfindung fallende Beispiele werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig.1 eine gattungsgemässe Koordinatenmessmaschine mit Dreh- bzw. Kippgelenke aufweisendem Gelenkarm;
Fig.2 eine Verbindungsanordnung eines Gelenkarms;
Fig.3 die Verbindungsanordnung aus Figur 4 mit einer dargestellten Axialverschiebung des Codeträgers;
Fig.4 die Verbindungsanordnung aus Figur 4 mit einer dargestellten Radialverschiebung des Codeträgers;
Fig.5 die Verbindungsanordnung aus Figur 4 mit einer dargestellten Verkippung des Codeträgers;
Fig.6 die Verbindungsanordnung aus Figur 4 mit einer Verkippung des Codeträgers sowie mit einer Verbiegung der Armglieder;
Fig.7 die erfindungsgemässe Verbindungsanordnung mit einer weiteren Ausführungsform für einen diesem zugeordneten Drehgeber;
Fig.8 eine zum Auslesen von Verschiebungen und/oder Verkippungen des Codeträgers gegenüber der Aufnahme geeignete Code-Projektion auf eine Sensoranordnung;
Fig.9 eine zum Auslesen von Verschiebungen und/oder Verkippungen des Codeträgers gegenüber der Sensoranordnung geeignete Code- Projektion; und
Fig.10 eine weitere zum Auslesen von Verschiebungen und/oder Verkippungen des Codeträgers gegenüber der Sensoranordnung geeignete Code-Projektion.

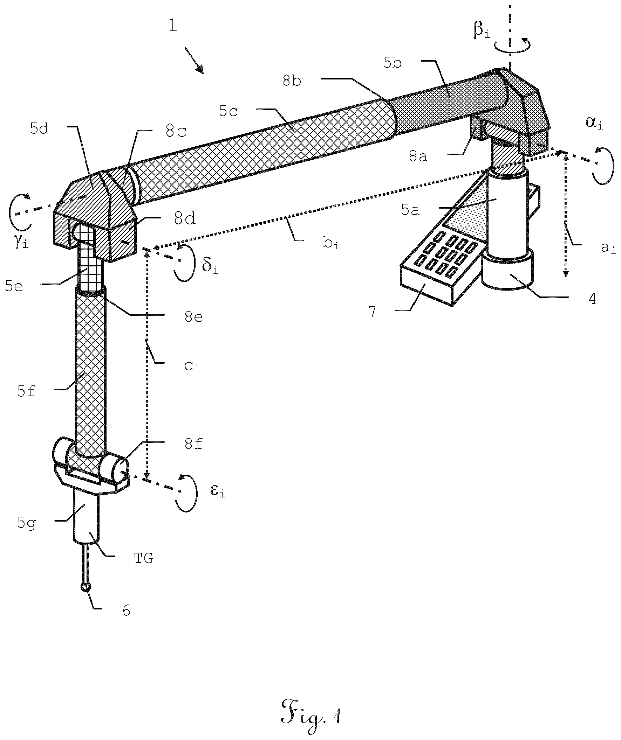

Figur 1 zeigt rein exemplarisch eine gattungsgemässe Koordinatenmessmaschine 1 mit Gelenkarm zur Positionsbestimmung eines Messpunktes als Beispiel für eine Messmaschine zur Oberflächenvermessung. Die Koordinatenmessmaschine 1 weist dabei eine - in einem Referenzkoordinatensystem fix und bekannt positionierte - Basis 4 auf. Von der Basis ausgehend sind nacheinander beispielhaft sieben Arm-Glieder 5a-5g als Verbindungselemente über relative Drehbewegungen ermöglichende Gelenke und/oder über relative Linearbewegungen ermöglichende Aufhängungen miteinander verbunden. Aus Darstellungsgründen, d.h. zur verständlicheren Darstellung, sind diese Gelenke und Aufhängungen in Figur 1 nicht explizit sichtbar gezeigt, wobei gattungsgemässe Gelenke und Aufhängungen dem Fachmann ohnehin hinlänglich bekannt sind.

Ein erstes der Glieder 5a ist dabei relativ zur Basis 4 beweglich an dieser befestigt, ein zweites der Glieder 5b ist am ersten Glied 5a relativ zu diesem beweglich befestigt, usw. Das siebte Glied 5g weist ein Messkomponente 6 auf und bildet insgesamt als Strukturelement das Tast-Glied TG. Die Messkomponente 6 ist somit innerhalb eines Raumabschnitts frei bewegbar und kann z.B. durch einen Benutzer händisch in eine Messposition gebracht werden, wobei der mechanische Kontakt zur Basis 4 durch die Abfolge der Verbindungselemente gewährleistet ist. Beispielsweise ist der Taster 6 als Rubinkugel zum Kontaktieren eines zu vermessenden Punktes einer Objektoberfläche ausgebildet, wobei aber auch berührungslos messende Systeme in gleicher Weise angeordnet und verwendet werden können. Alternativ können jedoch auch weitere aus dem Stand der Technik bekannte Messkomponenten anstelle des taktilen Tasters verwendet werden. So können als Messkomponente beispielsweise optische Sensoren - insbesondere ein optischer Distanzmesser, z.B. interferometrische Messanordnungen, ein Laserscanner oder eine Kamera zum Abtasten der Oberfläche Verwendung finden.

Als Messposition werden beispielsweise die Koordinaten eines Referenzpunktes der Messkomponente 6 und insbesondere zusätzlich eine aktuelle Ausrichtung der Messkomponente 6 in der jeweiligen aktuellen Messposition angegeben.

Die Glieder 5a-5g sind dabei zur einfacheren Unterscheidung in Figur 1 jeweils abwechselnd unterschiedlich schraffiert dargestellt. Basis 4 und Tast-Glied TG sind ohne Schraffur gezeigt.

Jeweils den Gelenken bzw. Aufhängungen zugeordnet sind mehrere Lagemesseinrichtungen 8a-8f zum Messen von Stellungen jeweils der Glieder 5a-5g zueinander. Beispielsweise sind als die Lagemesseinrichtungen 8a-8f optisch-elektronische Drehgeber als Lagemesseinrichtungen 8a,8c,8d,8f sowie Längenmesser als Lagemesseinrichtungen 8b,8e vorgesehen, die zum Messen von mit der relativen Lage der Glieder verknüpften Armstellungs-Messgrössen α,β,γ,δ,ε,a,b,c ausgebildet sind. Als Armstellungs-Messgrössen α,β,γ,δ,ε,a,b,c werden somit also jeweils Winkel α,β,γ,δ,ε und Längenauslenkungen a,b,c zwischen den Gliedern 5a-5g gemessen.

Eine Auswerteeinheit 7 ist dabei zum Empfang der für eine Messposition ermittelten Armstellungs-Messgrössen α,β,γ,δ, ε,a,b,c ausgebildet. Anhand dieser die relative Stellungen jeweils der Arm-Glieder zueinander angebenden Armstellungs-Messgrössen α,β,γ,δ,ε,a,b,c leitet die Auswerteeinheit die Messposition bzw. die Koordinaten der Messkomponente 6 ab und zeigt diese z.B. auf einem Display an.

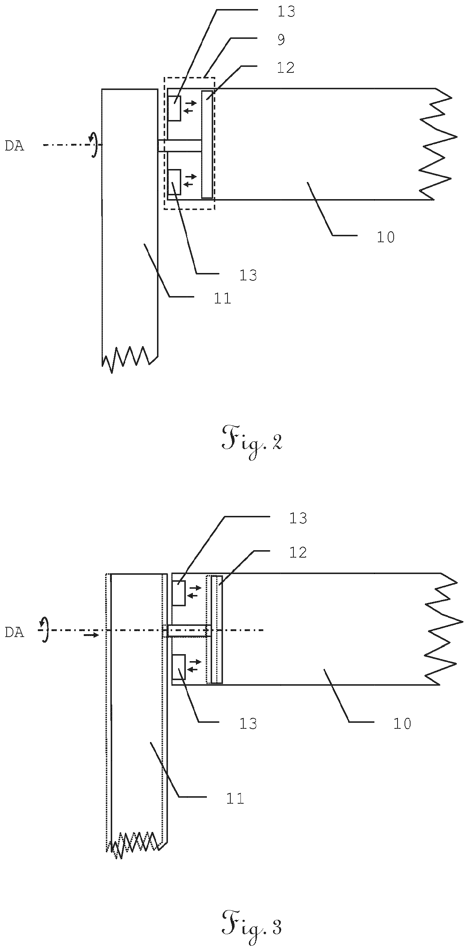

Figur 2 zeigt eine Verbindungsanordnung, Z.B. eines Gelenkarms, zur Verwendung mit einem Messverfahren, wobei die Verbindungsanordnung einen Drehgeber 9 aufweist, der die Rotation des wenigstens einen Verbindungselements 10, z.B. einem ersten Arm-Glied, gegenüber einer Aufnahme 11, z.B. als Ende eines zweiten Arm-Gliedes, erfasst. Dabei wird die Messkomponente durch eine Abfolge der Verbindungselemente 10 mittelbar mit der Basis verbunden, wobei jedoch erfindungsgemäss auch Messmaschinen mit nur einem einzigen Verbindungselement 10 und damit einer unmittelbaren Verbindung der Messkomponente mit der Basis durch diese eine Verbindungselement 10 realisierbar sind.

Der Drehgeber 9 umfasst jeweils einen Codeträger 12 und eine Sensoranordnung 13, wobei Codeträger 12 und Sensoranordnung 13 um eine definierte Drehachse DA als einem ersten Freiheitsgrad gegeneinander rotierbar sind. Hierzu wird eine von der dreidimensionalen Lage des Codeträgers 12 relativ zur Sensoranordnung 13 abhängigen Code-Projektion auf der Sensoranordnung 13 erzeugt und mindestens ein Teil der Code-Projektion durch diese erfaßt. Der Drehgeber 9 ist hierbei in an sich bekannter Weise aus einem mit der Aufnahme 11 starr verbundenen Codeträger 12 mit einem optisch erfassbaren Code, der beispielsweise als codetragende Glas- oder Kunststoffscheibe ausgebildet sein kann, und der aus einem oder mehreren Detektorelementen bestehenden Sensoranordnung 13 zur Erfassung der Code-Projektion, die entsprechend im Verbindungselement 10 angebracht sein kann, aufgebaut. Die Sensoranordnung 13 kann dafür zum Beispiel zwei Leseköpfe mit jeweils einer Zeilenanordnung von optischen Detektorelementen aufweisen. Die im Verbindungselement 10 angeordnete Sensoranordnung 13 besteht in den Figuren 2 bis 6 beispielhaft aus zwei Leseköpfen - z.B. wie sie nach dem Stand der Technik bekannt sind. Der Codeträger 12 ist als Codeträger mit einer als "Messtisch" fungierenden Codescheibe mit einem sich in Umfangsrichtung erstreckenden Code zugeordnet. Der Code kann dabei eine Vielzahl von aneinander gereiht angeordneten Musterelementen aufweisen, wobei die Musterelemente - z.B. in Dreiecksform - derart ausgebildet sind, sodass sich die Code-Projektion insbesondere zum zusätzlichen Auslesen von Lageänderungen in Nicht-Rotationsrichtung eigenen. Die Anordnung der Sensoranordnung 13 im Verbindungselement 10 und die mechanisch starre Verbindung des Codeträgers 12 mit der Aufnahme 11 stellt nur ein Beispiel dar. Insbesondere kann diese Anordnung auch umgekehrt werden, d.h. es ist erfindungsgemäss gleichfalls eine mechanisch starre Anordnung des Codeträgers 12 im Verbindungselement 10 und die mechanisch starre Verbindung der Sensoranordnung 13 mit der Aufnahme 11 realisierbar.

Zusätzlich zu einer Winkellage werden gemäss der Erfindung weitere Lagen des ersten Arm-Glieds zum zweiten Arm-Glied beim Bestimmen der relativen Messstellung berücksichtigt, wobei der als Codescheibe ausgeführte Codeträger 12 als "Messtisch" dient. Das bedeutet, dass die dreidimensionale Lage der Codescheibe gegenüber der Sensoranordnung 13 aus einem Schattenwurf der Codescheibe ausgelesen wird, wobei die Codescheibe wie eine Tischplatte fungiert, deren durch eine Deckenlampe auf dem Boden erzeugter Schatten abhängig ist von ihrem Standpunkt und ihrer Neigung gegenüber dem Boden. Dabei ist eine Modifikation der bereits in Koordinatenmessmaschinen vorhandenen Hardware nur bedingt notwendig. So muss die Lagemesseinrichtung, insbesondere der Drehgeber 9, gemäss der Erfindung nun die ermittelten, auf die Winkelmessung verzerrend wirkenden Verschiebungen bzw. Verkippungen des Codeträgers in Nicht-Rotationsrichtung nicht nur drehgeberintern bei der Winkelbestimmung berücksichtigen, sondern als weitere Messstellungsgrössen zusätzlich zur ermittelten Winkellage an eine übergeordnete Auswerteeinheit, die beispielsweise aus allen Messstellungs-Grössen von sämtlichen im Gelenkarm vorhandenen Gliederlagemesser die Messposition berechnet Anhand der Code-Projektion wird somit die auf die definierte Drehachse DA bezogene Drehlage des Codeträgers 12 ermittelt und unter Verwendung dieser für alle Verbindungselemente verfügbaren Information die aktuelle Messposition der Messkomponente relativ zur Basis bestimmt. Für den Drehgeber 9 wird, im Gegensatz zu Lösungen des Stands der Technik, anhand der Code-Projektion auch ein Lagewert für mindestens einen weiteren Freiheitsgrad des Codeträgers 12 relativ zur Sensoranordnung 13 ermittelt und beim Bestimmen der aktuellen Messposition berücksichtigt, wobei aus dem Lagewert eine dem weiteren Freiheitsgrad des Codeträgers entsprechende relative Lage des Verbindungselementes 10 gegenüber der Aufnahme 11 und/oder dessen Deformation bestimmt werden. Die im Stand der Technik verwendeten Winkelmesser bestimmen zwar teilweise ebenfalls laterale Verschiebung oder Abstandsänderungen des Codes zu den Detektoren, nutzen diese Information jedoch lediglich zur Genauigkeitssteigerung bei der Winkelmessung, d.h. der Bestimmung der Drehlage. Hingegen wird erfindungsgemäss der Lagewert für den weiteren Freiheitsgrad verwendet, um daraus Schlüsse hinsichtlich der Lage bzw. Orientierung des Verbindungselementes 10 sowie ggf. der wirkenden Kräfte bzw. einer Deformation des Verbindungselementes 10 zu ziehen, wobei Lage bzw. Orientierung des Verbindungselementes dem weiteren Freiheitsgrad des Codeträgers 12 entsprechen. Eine Exzentrizität des Codeträgers 12 wird somit genutzt, um eine exzentrische Position des Verbindungselementes 10 gegenüber der Aufnahme 11 zu bestimmen, wobei allerdings aufgrund von Fehlern oder Veränderungen der relativen Positionierung von Codeträger 12 und Verbindungselement 10 Abweichungen im Wert der den weiteren Freiheitsgrad beschreibenden Grösse auftreten können. So wird bei einer Verkippung des Codeträgers 12 auf eine korrespondierende Verkippung des Verbindungselementes 10 gegenüber der Aufnahme 11 geschlossen, wobei diese bspw. aufgrund elastischer Einflüsse auch grösser oder kleiner als der Wert der Verkippung des Codeträgers 12 ausfallen kann. Betrachtet wird jedoch in beiden Fällen der Freiheitsgrad einer Verkippung bzw. der Rotation um die zugeordnete Kippachse.

Wie zum Beispiel in den oben zitierten Dokumenten des Standes der Technik beschrieben ist, kann nun die Code-Projektion ausgelesen und daraus - durch Rundlauffehler und Belastungen des Drehgelenks hervorgerufene - Lageänderungen des Codeelements bzw. Codeträgers 12 relativ zur Sensoranordnung 13 - d.h. beispielsweise Abweichungen eines Codezentrums von der Drehachse DA - abgeleitet werden. Im Gegensatz zur nach dem Stand der Technik bekannten Verwendung dieser Lageänderungen des Codeträgers 12 gegenüber der Sensoranordnung 13 lediglich zum Korrigieren einer zu bestimmenden Winkelstellung dieser beiden Komponenten zueinander, werden erfindungsgemäss diese Lageänderungen als Grössen, die die relative Stellung Verbindungselementes 10, z.B. im Fall eines Gelenkarmes des ersten zum zweiten Armglied angibt, berücksichtigt und beim Berechnen der Position der Messkomponente gegenüber der Basis als Messstellungs-Grössen verwendet. Somit werden auch über einen Drehwinkel hinausgehende Lageänderungen des Codeträgers 12 gegenüber der Sensoranordnung 13 aus der erfassten Code-Projektion explizit ermittelt und zum Bestimmen der Messposition verwendet. Zwar werden durch eine entsprechende, präzise Lagerung des Codeträgers 12 solche Verschiebungen und Verkippungen im Wesentlichen verhindert, jedoch wirken sich bereits minimale Verschiebungen bzw. Verkippungen auf die Genauigkeit für das Bestimmen der Messposition des Tasters aus. Die zwar grundsätzlich unerwünschten, jedoch nicht vollständig vermeidbaren Lageänderungen werden somit nicht nur in Kauf genommen, sondern bestimmt und als Information zur Beschreibung des Gesamtzustandes des mechanischen Systems der Messmaschine genutzt. Somit wird zum einen die Veränderung zwischen den der Aufnahme und damit dem einen Arm-Glied zugeordneten Komponenten und den Komponenten des Verbindungselementes als dem anderen Arm-Glied ermittelt, so dass Veränderungen im Gelenk bzw. der Verbindungsanordnung quantifiziert und berücksichtigt werden können. Zum anderen kann aus dem Ausmass der Veränderung und den Winkelstellungen auf die wirkenden Kräfte geschlossen werden, so dass gewichtsbedingte Deformationen von Komponenten oder deren Verbindungen ermittelt werden können. Zudem können auch thermische oder alterungsbedingte Änderungen in der Verbindungsanordnung erfasst und berücksichtigt werden.

Erfindungsgemäss erfolgt hierzu ein Ermitteln wenigstens einer, insbesondere aber aller der folgenden Lageänderungen bzw. Lagewerte: eine Verschiebung in radialer Richtung relativ zur Drehachse DA, eine Verschiebung in Richtung der Drehachse DA und eine Verkippung um die Drehachse DA.

Insbesondere können die Lagewerte aus derselben Code-Projektion bestimmt werden, die auch zum Auslesen der Winkellage des Codeelements relativ zur Sensoranordnung dient. Ebenso können erfindungsgemäss die ermittelten Lagewerte weiterhin auch zur Korrektur und/oder Kalibrierung bei der Bestimmung der Winkellage verwendet werden.

Figuren 3 bis 6 zeigen beispielhaft durch Belastung des Drehgelenks hervorgerufene Lageänderungen in Nicht-Rotationsrichtung des Codeträgers 12 gegenüber der Sensoranordnung 13.

In Figur 3 ist der Codeträger 12 relativ zur Sensoranordnung 13 in Richtung der Drehachse DA verschoben. Eine solche Lageänderung kann aus der Code-Projektion z.B. aus einer Massstabsänderung der durch die Sensoranordnung erfassten Code-Projektion abgeleitet werden. Die dazugehörige Lageänderungs-Grösse kann anschliessend als Axial-Verschiebungs-Ausmass (Δh) bezüglich dieses Drehgelenks der Auswerteeinheit übermittelt werden.

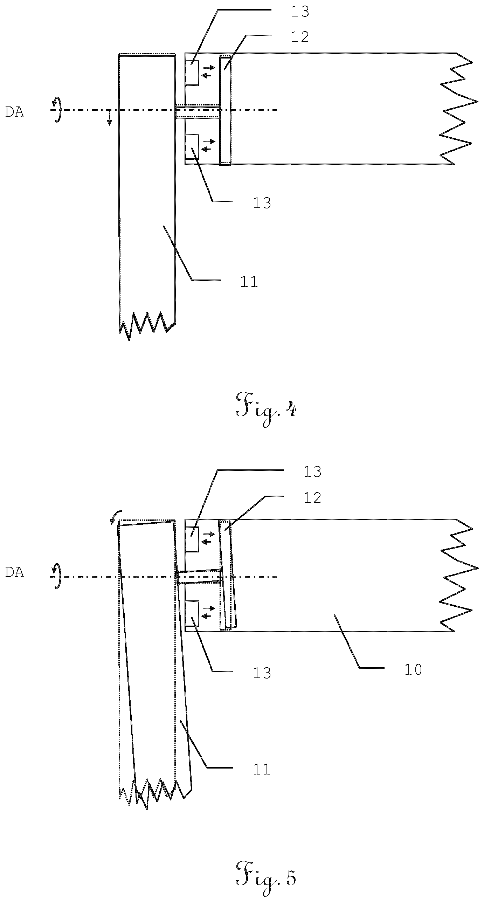

In Figur 4 ist der Codeträger 12 relativ zur Sensoranordnung 13 und bezüglich der Drehachse DA in radialer Richtung verschoben. Eine derartige Lageänderung kann aus der Code-Projektion z.B. anhand von Verschiebungen der durch die Sensoranordnung 13 aufgelösten Positionen der Musterelemente abgeleitet werden. Die dazugehörigen Lageänderungs-Grössen können anschliessend als Radial-Verschiebungs-Richtung (RR) und Radial-Verschiebungs-Ausmass (Δr) bezüglich dieses Drehgelenks der Auswerteeinheit übermittelt werden.

In Figur 5 ist der Codeträger 12 relativ zur Sensoranordnung 13 und bezüglich der Drehachse DA gekippt. Eine derartige Lageänderung kann aus der Code-Projektion z.B. aus einem Massstabs-Verhältnis der durch den ersten Lesekopf erfassten Code-Projektion zu der durch den zweiten Lesekopf erfassten Code-Projektion abgeleitet werden. Die dazugehörigen Lageänderungs-Grössen können z.B. als Verkippungs-Richtung und Verkippungs-Winkel (Δκ) bezüglich dieses Drehgelenks der Auswerteeinheit übermittelt werden.

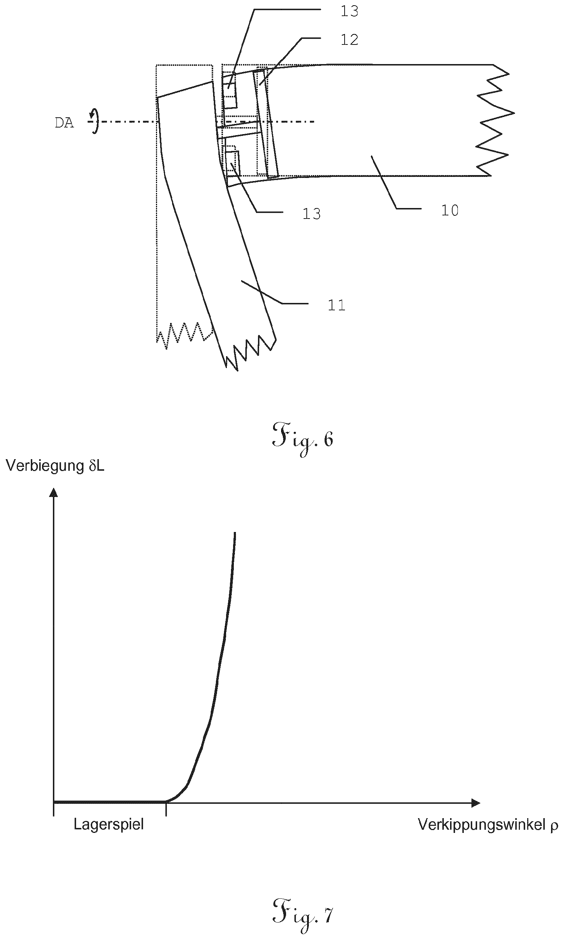

Wie in Figur 6 dargestellt ist, kann es vorkommen, dass zusätzlich zur Verkippung und ggf. der reinen gewichtsbedingten und geringfügigen Deformation auch eine darüber hinaus gehende Verbiegung bzw. Deformation der beiden gegeneinander rotierbar verbundenen Arm-Glieder bewirkt wird z.B. durch eine höhere Belastung auf das Drehgelenk. Eine solche Belastung kann beispielsweise bei Verwendung von besonders schweren Messkomponenten auftreten, wenn eine solche Auswechselbarkeit von Tastern vorgesehen ist. Anhand von empirischen Experimenten und/oder unter Berücksichtigung von Modellen oder Deformationsparametern des ersten bzw. zweiten Arm-Glieds durchgeführten Berechnungen können als weitere Messstellungs-Grössen nun - von der Verkippung abhängig - Verbiegungen der Arm-Glieder ermittelt und zum Ableiten der Messposition der Messkomponente in einem bezüglich der Messmaschinen-Basis aufgespannten Koordinatensystem verwendet werden.

Dabei wird angenommen, dass als Mass für eine Verbiegung der über das Drehgelenk verbundenen Arm-Glieder - modellhaft und in guter Näherung - ein Ausmass der ermittelten Verkippung herangezogen werden kann.

Beispielsweise kann dafür eine anhand von Deformationsgesetzen für Festkörper hergeleitete und/oder durch empirische Experimente festgelegte Funktion der Verbiegung eines der Arm-Glieder in Abhängigkeit der Verkippung um die Drehachse aufgestellt werden. Ein Beispiel für eine solche Funktion ist in Figur 7 dargestellt, wobei ein Ausmass der Verbiegung δL des entsprechenden Arm-Glieds - rein schemenhaft und prinzipiell - über dem ermittelten Verkippungs-Winkel p aufgetragen ist. Die Funktion kann dabei derart gewählt werden, dass bis zu einem durch ein Lagerspiel im Drehgelenk vorgegebenen Verkippungs-Winkel das Ausmass der Arm-Gelenk-Verbiegung gleich Null gesetzt wird. In diesem Verkippungs-Bereich werden die auf die Arm-Glieder wirkenden Kräfte durch die im Üblichen sehr steifen Körper der Arm-Glieder im Wesentlichen vollständig auf die Gelenke übertragen und bewirken dort vorerst eben die im Rahmen des Drehgelenkspiels ausgeführte Verkippung um die Drehachse. Ist der Codeträger durch eine Verkippung an einem Anschlag im Drehgelenk angelangt, so bewirkt eine weitere Kraftausübung auch eine Deformation der Arm-Glieder im Wesentlichen in Form einer Verbiegung. Je nach Ausführung des Verbindungselementes kann hierbei aber auch deren oben beschriebene lage- und gewichtsabhängige Deformation modelliert werden.

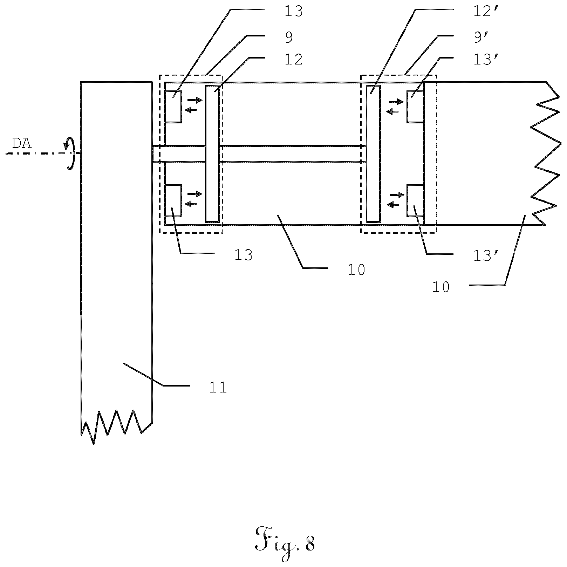

In Figur 8 ist eine alternative Ausführungsform für eine Verbindungsanordnung in Form eines Drehgelenkes mit zwei Drehgebern 9 und 9' dargestellt.

Dabei ist dem Drehgelenk ein erster Drehgeber 9 und ein zweiter Drehgeber 9' zugeordnet, bei denen die beiden optisch erfassbaren Codescheiben als erster und zweiter Codeträger 12 und 12' voneinander beabstandet auf einer gemeinsamen Achse als Drehachse DA angeordnet sind. Den beiden Codescheiben ist jeweils eine Sensoranordnung 13 und 13' aus mindestens zwei Leseköpfen zugeordnet, wobei die Sensoranordnungen 13 und 13' jeweils eine Codeelement-Projektion erfassen und sich gegenüberliegend im Verbindungselement 10 angeordnet sind.

Eine solche Anordnung als Winkelmesser und zusätzlich als Messinstrument für axiale und/oder radiale Verschiebungen bzw. Verkippungen des Codeträgers ermöglicht ein hoch präzises Ermitteln der exakten dreidimensionalen Lage bzw. Stellung der Codeträger 12 und 12' gegenüber den Sensoranordnungen 13 und 13'. Eben diese exakt ermittelte Stellung, die anhand von Messstellungs-Grössen wie einem Drehwinkel um die Drehachse, einer Radial-Verschiebungs-Richtung, einem Radial-Verschiebungs-Ausmass, einem Axial-Verschiebungs-Ausmass, einer Verkippungs-Richtung und/oder einem Verkippungs-Winkel erfasst wird, kann unter Berücksichtigung der starren Kopplung der Codeträger 12 und 12' auf der einen Seite und der Sensoranordnungen 13 und 13' auf der anderen Seite zueinander in Beziehung gesetzt werden. So können Ausdehnung und Längenänderung der gemeinsamen Achse oder des Gehäuses des Verbindungselementes anhand der Abstandsänderung der Codeträger 12 und 12' zu den jeweiligen Sensoranordnungen 13 und 13' erkannt und quantitativ bestimmt werden. Ebenso kann bei als starr angenommener Achse und gegenläufigen Verkippungen von Codeträger 12, 12' und Sensoranordnungen 13, 13' in den Drehgebern 9 und 9' auf eine Verbiegung des Verbindungselementes 10 geschlossen werden. Bei einer gleichgerichteten Verkippung kann hingegen ein weitgehend starres Verhalten des Verbindungselementes 10 und dessen gesamthafte Bewegung geschlossen werden.

Erfindungsgemäss kann insbesondere der weitgehende oder vollständige Ersatz von anderen Sensoren in Messmaschinen erfolgen, z.B. von reinen längenmessenden Sensoren, so dass eine vollständige und hochpräzise Bestimmung der Messposition bzw. räumlichen Lage der Messkomponente alleine durch die Verwendung von einheitlich aufgebauten Drehgebern möglich wird. Durch die damit mögliche ausschliessliche Verwendung eines einzigen Sensortyps kann der mechanische und elektronische Aufbau vereinfacht werden. Insbesondere kann in einem Gelenkarm mehrere oder auch jede der Verbindungsanordnungen zwischen den Arm-Gliedern mit jeweils zwei auf einer gemeinsamen Drehachse angeordneten Drehgebern ausgeführt werden, so dass neben der relativen Lage des Verbindungselementes gegenüber seiner Aufnahme jeweils auch Deformationen als Abweichung von der Sollform, d.h. sowohl Verformungen als auch Skalenänderungen, wie z.B. Vergrösserung oder Verkleinerung von Länge oder Durchmesser, bestimmt werden können. Somit ist es auch möglich, die relative räumliche Lage aller Komponenten zueinander ausschliesslich durch Drehgeber zu bestimmen, wobei ergänzend weitere Sensoren verwendet werden können, die jedoch nicht direkt die räumliche Lage messen sondern zusätzliche Parameter bereitstellen, wie z.B. Temperatursensoren, die einen Schluss über die temperaturbedingte Verformung der Komponenten erlauben.

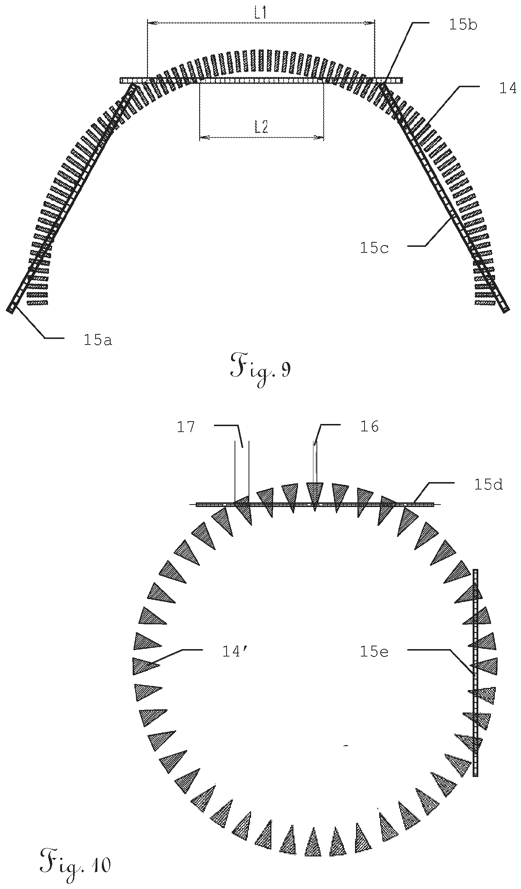

In Figur 9 ist ein Beispiel für eine durch einen Codeträger als Codeträger mit in Umfangsrichtung angeordneten Musterelementen 14 erzeugte Code-Projektion auf eine Sensoranordnung aus drei um 60° versetzten Sensorzeilen 15a-c dargestellt. Durch ein Auflösen von Positionen der projizierten Musterelemente 14 auf den Sensorzeilen 15a-c können in an sich bekannter Weise sowohl die Drehwinkelstellung als auch die bereits erläuterten weiteren Lageänderungen des Codeträgers relativ zur Sensoranordnung somit des Verbindungselementes gegenüber der Aufnahme bestimmt werden.

Das beispielhaft als Balkenmuster ausgebildete Muster des Codeträgers weist eine Vielzahl im selben Abstand zueinander in Drehrichtung hintereinander um ein Musterzentrum angeordneter Musterelemente 14 auf, die z.B. als lichtundurchlässige, radial ausgerichtete Balken ausgebildet sind. Über zwischen den Balken hindurch tretende Strahlen wird ein Teil des Balkenmusters als helle und dunkle Bereiche auf den lichtempfindlichen Detektorelementen abgebildet.

Zudem bilden die nach aussen und die nach innen gerichteten Stirnseiten der Balken zwei konzentrische, diskontinuierliche Kreislinien, die zum Musterzentrum symmetrische Muster verkörpern. Über die Sensorzeilen 15a-c als Detektorelemente lassen sich hier, insbesondere während einer Drehung des Balkenmusters, die Längen L1 und L2 der Ein- und Austritte der jeweiligen Balken in bzw. aus dem ortsauflösenden Bereich auflösen. Mit den auf diese Weise aufgelösten Positionen können dann beispielsweise eine Radialverschiebung und/oder eine Verkippung rechnerisch ermittelt werden. Grundsätzlich kann der Lagewert rechnerisch anhand einer Position wenigstens eines der Musterelemente 14, eines Verhältnisses von Positionen mehrerer der Musterelemente 14 zueinander oder einer Abfolge von Positionen mehrerer hintereinander angeordneter Musterelemente 14 bestimmt werden. Dabei kann der Code bzw. die Code-Projektion auf die Sensoranordnung auch redundant, d.h. hinsichtlich der zu bestimmenden Grösse als überbestimmt ausgelegt werden, so dass die durch die Redundanz zur Verfügung stehende Zusatzinformation verwendet werden kann.

Figur 10 zeigt ein Ausführungsbeispiel, das sich vom in Figur 9 gezeigten Ausführungsbeispiel durch zwei um 90° versetzte Sensorzeilen 5d und 5e als Sensoranordnung und durch eine andere Ausbildung des Musters, insbesondere der radial zum Musterzentrum hin ausgerichteten, in Drehrichtung hintereinander angeordneten Musterelementen 14', unterscheidet. Der Codeträger wird hier durch eine lichtdurchlässige Glasscheibe mit lichtundurchlässigen Dreiecken verkörpert. Der um die Achse drehbare Codeträger könnte jedoch auch beispielsweise in Form einer dünnen Metallscheibe ausgebildet sein, das hier dreieckförmige Ausnehmungen aufweist, welche die in Drehrichtung hintereinander angeordneten Musterelemente 14' verkörpern.

Die - beispielsweise dreieckige - Ausführung der Musterelemente 14', bei der einander zugewandte Seitenlinien benachbarter, hintereinander angeordneter Musterelemente 14' wesentlich gegen die Radialrichtung geneigt ausgebildet sind, weist durch die zusätzliche Neigung gegen die Radialrichtung eine grössere Sensitivität in Bezug auf ein Ermitteln von Verschiebungen oder Verkippungen des Codeträgers durch den ortsauflösenden Bereich auf. Sie ermöglicht sogar ein Ermitteln solcher Lageänderungen des Codeträgers über ein Auflösen der Breite eines einzigen Dreiecks, was hier für die beiden Breiten 16 und 17 des auf die Sensorzeile 15d projizierten Bereichs dargestellt wird. So kann beispielsweise aus der Breite 16 der Projektion die Lage bzw. deren Verschiebung in hier radialer Richtung erkannt und deren Ausmass bestimmt werden. Selbstverständlich ist es auch möglich, solche Lageänderungen über die Abstände zwischen den Dreiecken zu ermitteln. Durch die hier dreieckförmige Form der in Richtung des Musterzentrums gerichteten Musterelemente können hier hingegen - im Vergleich zu rechteckförmigen Musterelementen - weniger hintereinander angeordnete Musterelemente vorgesehen werden, wodurch eine geringere Auflösung erzielbar ist.

Die Sensoranordnung des Drehgebers kann jedoch grundsätzlich und in Abhängigkeit von Codegestaltung und Genauigkeitsanforderungen sowohl einen als auch zwei oder mehr Leseköpfe bzw. Sensorzeilen aufweisen, wobei grundsätzlich neben Sensorzeilen als Lineararrays auch Flächensensoren, d.h. zweidimensionale Anordnungen von Bildpunktsensoren Verwendung finden können. Bei zwei oder mehr Leseköpfen können diese bspw. in Umfangsrichtung 180° versetzt zueinander angeordnet sein, wobei diese bei vier Leseköpfe in Umfangsrichtung jeweils um 90° versetzt angeordnet werden können. Bei drei Leseköpfen aufweist, die können diese jeweils um 120° versetzt angeordnet sein. Neben der Aufteilung der Anordnung mit gleichen Winkelabständen zwischen den Leseköpfen bzw. Sensorkomponenten können jedoch Sensoranordnungen des Drehgebers mit bspw. wenigstens vier Leseköpfen realisiert werden, die in Umfangsrichtung mit unterschiedlichen Winkeln versetzt zueinander angeordnet sind, so dass sich z.B. alle Winkelabstände voneinander unterscheiden, insbesondere zueinander in keinem Verhältnis von Vielfachen stehen.

Ebenso kann beispielsweise auch ein, insbesondere einziger Flächensensor Verwendung finden, der auf der Drehachse angeordnet ist bzw. diese und einen angrenzenden Bereich erfasst und somit eine grossen Winkelbereich im achsnahen Bereich oder auch den vollen Winkelbereich abdeckt. Insbesondere können bei einem Codeträger auch an zwei gegenüberliegenden Stirnflächen Codemuster angebracht sein, denen wiederum jeweils ein die Drehachse überdeckender Flächensensor zugeordnet ist. Solche Anordnungen mit flächigen Codes, die von einem entsprechenden Sensor erfasst werden, sind beispielsweise aus der WO 2008/019855 bekannt.

Es versteht sich, dass diese dargestellten Figuren nur Beispiele möglicher Ausführungsformen schematisch darstellen.

## Patentansprüche

1. Messverfahren für eine oberflächenvermessende Messmaschine, insbesondere eine Koordinatenmessmaschine (1), mit
- einer Basis (4),
- einer Messkomponente (6) zur Herstellung und Aufrechterhaltung einer kontaktierenden oder kontaktlosen, insbesondere optischen Messverbindung zu einer zu vermessenden Oberfläche, wobei die Messkomponente (6) mit der Basis (4) durch wenigstens ein Verbindungselement (10) verbunden ist,
- wenigstens einem Drehgeber (9,9'), der die Rotation des wenigstens einen Verbindungselements (10) gegenüber einer Aufnahme (11) erfasst und jeweils einen als Codescheibe ausgebildeten Codeträger (12,12') und eine Sensoranordnung (13,13') aufweist, wobei Codeträger und Sensoranordnung um eine definierte Drehachse (DA) als einem ersten Freiheitsgrad gegeneinander rotierbar sind,
und mit einem
• Erzeugen einer von der dreidimensionalen Lage des Codeträgers (12,12') relativ zur Sensoranordnung (13,13') abhängigen Code-Projektion in Form eines Schattenwurfs der Codescheibe auf der Sensoranordnung (13,13') und Erfassen mindestens eines Teiles der Code-Projektion,
• Ermitteln einer auf die definierte Drehachse (DA) bezogenen Drehlage des Codeträgers (12,12') anhand der Code-Projektion,
• Bestimmen der aktuellen Messposition der Messkomponente (6) relativ zur Basis (4) unter Verwendung der Drehlage des wenigstens einen Drehgebers (9,9'),
**dadurch gekennzeichnet, dass**
für den wenigstens einen Drehgeber (9,9') anhand der Code-Projektion ein Lagewert für mindestens einen weiteren Freiheitsgrad des Codeträgers (12,12') relativ zur Sensoranordnung (13,13') ermittelt und als zusätzliche Messgrösse, die eine relative Lage des Verbindungselements (10) gegenüber der Aufnahme (11) angibt, beim Berechnen der aktuellen Messposition berücksichtigt wird,
wobei aus dem Lagewert die dem mindestens einen weiteren Freiheitsgrad des Codeträgers (12,12') entsprechende relative Lage des Verbindungselementes (10) gegenüber der Aufnahme (11) bestimmt wird, wobei als Lagewert
• eine Auslenkung des Codeträgers (12,12') aus einer Ruhelage,
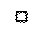 in relativ zur Drehachse (DA) radialer Richtung und 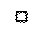
in Richtung der Drehachse (DA)
und
• eine Verkippung des Codeträgers (12,12') aus einer Ruhelage relativ zur Sensoranordnung (13,13'), ermittelt wird und
für den wenigstens einen Drehgeber 9,9') Drehlage, Auslenkung und Verkippung und somit die Lage des Codeträgers (12,12') relativ zur Sensoranordnung (13,13') in allen sechs Freiheitsgraden ermittelt werden, wozu die dreidimensionale Lage des Codeträgers (12,12') gegenüber der Sensoranordnung (13,13') aus dem Schattenwurf ausgelesen wird.

2. Messverfahren nach einem der vorangehenden Ansprüche,
**dadurch gekennzeichnet, dass**
für den wenigstens einen Drehgeber (9,9') eine Aufteilung in deformations- und relativlagebedingte Anteile anhand der Orientierung eines mit der Aufnahme (11) verbundenen weiteren Verbindungselementes erfolgt.

3. Messverfahren nach einem der vorangehenden Ansprüche,
**dadurch gekennzeichnet, dass**
für wenigstens einen zweiten Drehgeber (9') dessen Drehlage und dessen Lagewert ermittelt und beim Bestimmen der räumlichen Lage der Messkomponente (6) berücksichtigt werden.

4. Messverfahren nach Anspruch 3,
**dadurch gekennzeichnet, dass**
die Messposition anhand der ausschliesslich über die Drehlagen und Lagewerte der wenigstens zwei Drehgeber (9,9') abgeleiteten räumlichen Lage der Verbindungselemente bestimmt wird.

5. Messverfahren nach einem der vorangehenden Ansprüche,
**dadurch gekennzeichnet, dass**
der Drehgeber (9,9') wenigstens zwei Codeträger (12,12') aufweist, die um dieselbe, insbesondere auf einer gemeinsamen Drehachse drehbar und voneinander beabstandet angeordnet sind, und für jeden der Codeträger (12,12') anhand der jeweiligen Code-Projektion ein Lagewert ermittelt wird, wobei aus der Verknüpfung der Lagewerte der beiden Codeträger (12,12') eine, insbesondere dem weiteren Freiheitsgrad des Codeträgers (12,12') entsprechende, relative Lage des Verbindungselementes (10) gegenüber der Aufnahme (11) und/oder die Deformation des Verbindungselementes (10) bestimmt wird.

6. Verbindungsanordnung, insbesondere Kipp- oder Drehverbindung, für eine Messmaschine, insbesondere mit Gelenkarm, mit
• einem Verbindungselement (10) zur mittelbaren oder unmittelbaren Verbindung einer Basis (4) mit einer Messkomponente (6) zur Herstellung und Aufrechterhaltung einer Messverbindung zu einer zu vermessenden Oberfläche, und
• wenigstens einem Drehgeber (9,9'), der die Rotation des wenigstens einen Verbindungselement (10) gegenüber einer Aufnahme (11) erfasst und jeweils einen als Codescheibe ausgebildeten Codeträger (12,12') und eine Sensoranordnung (13,13') aufweist, wobei Codeträger (12,12') und Sensoranordnung (13,13') um eine definierte Drehachse (DA) als einem ersten Freiheitsgrad gegeneinander rotierbar sind, und
einer Auswerteeinheit (7) zum Bestimmen der aktuellen Messposition der Messmaschine,
**dadurch gekennzeichnet, dass**
der Drehgeber (9,9') zur aus der Code-Projektion in Form eines Schattenwurfs der Codescheibe erfolgenden Bestimmung und Bereitstellung von wenigstens einem Lagewert bezüglich mindestens einem von fünf weiteren Freiheitsgraden der dreidimensionalen Lage des Codeträgers (12,12') relativ zur Sensoranordnung (13,13'), nämlich
• einer Auslenkung des Codeträgers (12,12') in relativ zur Drehachse (DA) radialer Richtung,
• einer Auslenkung des Codeträgers (12,12') in Richtung der Drehachse (DA) und
• einer Verkippung des Codeträgers (12,12') bezüglich der Drehachse (DA),
ausgebildet ist, und die Auswerteeinheit (7) dazu ausgebildet ist, die aktuelle Messposition unter Berücksichtigung des Lagewertes als zusätzliche Messgrösse, die eine relative Lage des Verbindungselements (10) gegenüber der Aufnahme (11) angibt zu berechnen, wobei aus dem Lagewert die dem mindestens einen weiteren Freiheitsgrad des Codeträgers (12,12') entsprechende relative Lage des Verbindungselementes (10) gegenüber der Aufnahme (11) bestimmbar ist und wobei
für den wenigstens einen Drehgeber 9,9') Drehlage, Auslenkung und Verkippung und somit die Lage des Codeträgers (12,12') relativ zur Sensoranordnung (13,13') in allen sechs Freiheitsgraden ermittelt werden, wozu die dreidimensionale Lage des Codeträgers (12,12') gegenüber der Sensoranordnung (13,13') aus dem Schattenwurf ausgelesen wird.

7. Verbindungsanordnung nach Anspruch 6,
**dadurch gekennzeichnet, dass**
die Sensoranordnung (13,13') des Drehgebers (9,9') wenigstens zwei Leseköpfe aufweist, die in Umfangsrichtung 180° versetzt zueinander angeordnet sind, insbesondere vier Leseköpfe aufweist, die in Umfangsrichtung jeweils um 90° versetzt zueinander angeordnet sind.

8. Verbindungsanordnung nach Anspruch 6,
**dadurch gekennzeichnet, dass**
die Sensoranordnung (13,13') des Drehgebers (9,9') drei Leseköpfe aufweist, die in Umfangsrichtung jeweils um 120° versetzt angeordnet sind.

9. Verbindungsanordnung nach Anspruch 6,
**dadurch gekennzeichnet, dass**
die Sensoranordnung (13,13') des Drehgebers (9,9') wenigstens vier Leseköpfe aufweist, die in Umfangsrichtung mit unterschiedlichen Winkeln versetzt zueinander angeordnet sind.

10. Verbindungsanordnung nach einem der Ansprüche 6 bis 9,
**dadurch gekennzeichnet, dass**
der Drehgeber (9,9') wenigstens zwei Codeträger (12,12') aufweist, die um dieselbe, insbesondere auf einer gemeinsamen Drehachse (DA) drehbar und voneinander beabstandet angeordnet sind, wobei den beiden Codeträgern (12,12') jeweils eine Sensoranordnung (13,13') aus mindestens zwei Leseköpfen zugeordnet ist, die jeweils eine Codeelement-Projektion erfassen und sich gegenüberliegend angeordnet sind.

11. Verbindungsanordnung nach einem der Ansprüche 6 bis 10,
**dadurch gekennzeichnet, dass**
der Codeträger (12,12') mehrere Musterelemente (14,14') als Code aufweist und die Sensoranordnung (13,13') projizierte Positionen mehrerer Musterelemente (14,14') der Code-Projektion auflöst, wobei der mindestens eine Lagewert rechnerisch bestimmt wird anhand
• einer Position wenigstens eines der Musterelemente (14,14'),
• eines Verhältnisses von Positionen mehrerer der Musterelemente (14,14') zueinander,
• einer Abfolge von Positionen mehrerer hintereinander angeordneter Musterelemente (14,14').

12. Koordinatenmessmaschine (1) mit Gelenkarm zum Bestimmen einer Messposition, wobei der Gelenkarm ein erstes Ende als Basis (4), ein zweites Ende mit einer Messkomponente (6) zur Herstellung und Aufrechterhaltung einer kontaktierenden oder kontaktlosen, insbesondere optischen Messverbindung zu einer zu vermessenden Oberfläche, und wenigstens zwei Armelemente aufweist, die als Verbindungsanordnungen (10) nach einem der Ansprüche 6 bis 11 ausgebildet sind.

13. Koordinatenmessmaschine (1) nach Anspruch 12,
**dadurch gekennzeichnet, dass**
die Messposition ausschliesslich anhand der Drehlagen und Lagewerte der Drehgeber (9,9') der Verbindungsanordnungen (10) bestimmt wird.

## Claims

1. A measurement method for a surface-measuring measuring machine, in particular a coordinate measuring machine (1), comprising
- a base (4),
- a measurement component (6) for producing and maintaining a contact-making or contactless, in particular optical, measurement connection to a surface to be measured, wherein the measurement component (6) is connected to the base (4) by at least one connection element (10),
- at least one rotary encoder (9, 9'), which detects the rotation of the at least one connection element (10) with respect to a receptacle (11) and in each case has a code disk embodied as a code carrier (12, 12') and a sensor arrangement (13, 13'), wherein code carrier and sensor arrangement are rotatable with respect to one another about a defined axis of rotation (DA) as a first degree of freedom,
and comprising
• generating a code projection in the form of a shadow casting of the code disk on the sensor arrangement (13, 13'), said code projection being dependent on the three-dimensional position of the code carrier (12, 12') relative to the sensor arrangement (13, 13'), and detecting at least part of the code projection,
• determining a rotational position - relative to the defined axis of rotation (DA) - of the code carrier (12, 12') on the basis of the code projection,
• determining the current measurement position of the measurement component (6) relative to the base (4) using the rotational position of the at least one rotary encoder (9, 9'),
**characterized in that**
for the at least one rotary encoder (9, 9'), on the basis of the code projection, a position value for at least one further degree of freedom of the code carrier (12, 12') relative to the sensor arrangement (13, 13') is determined and taken into account as an additional measurement variable, which describes the relative position of the connection element (10) with respect to the receptacle (11), when determining the current measurement position, wherein the position value is used to determine a relative position - corresponding to the at least one further degree of freedom of the code carrier (12, 12') - of the connection element (10) with respect to the receptacle (11),wherein
• a deflection of the code carrier (12, 12') from a rest position,
▪ in a radial direction relative to the axis of rotation (DA) and
▪ in the direction of the axis of rotation (DA), and
• a tilting of the code carrier (12, 12') from a rest position relative to the sensor arrangement (13, 13')
are determined as the position value and rotational position, deflection and tilting and thus the position of the code carrier (12, 12') relative to the sensor arrangement (13, 13') in all six degrees of freedom are determined for the at least one rotary encoder (9, 9'), wherefore the three-dimensional position of the code carrier (12, 12') with respect to the sensor arrangement (13, 13') is read from the shadow casting.

2. The measurement method as claimed in any one of the preceding claims,
**characterized in that**
for the at least one rotary encoder (9, 9') a division into deformation- and relative-position-governed portions is effected on the basis of the orientation of a further connection element connected to the receptacle (11).

3. The measurement method as claimed in any one of the preceding claims,
**characterized in that**
for at least one second rotary encoder (9') the rotational position thereof and the position value thereof are determined and taken into account when determining the spatial position of the measurement component (6).

4. The measurement method as claimed in claim 3,
**characterized in that**
the measurement position is determined on the basis of the spatial position of the connection elements, said spatial position being derived exclusively by means of the rotational positions and position values of the at least two rotary encoders (9, 9').

5. The measurement method as claimed in any one of the preceding claims,
**characterized in that**
the rotary encoder (9, 9') has at least two code carriers (12, 12'), which are rotatable about the same, in particular on a common, axis of rotation and are arranged at a distance from one another, and a position value is determined for each of the code carriers (12, 12') on the basis of the respective code projection, wherein the combination of the position values of the two code carriers (12, 12') is used to determine a relative position - corresponding, in particular, to the further degree of freedom of the code carrier (12, 12') - of the connection element (10) with respect to the receptacle (11) and/or the deformation of the connection element (10).

6. A connection arrangement, in particular a tilting or rotary connection, for a measuring machine, in particular comprising an articulated arm, comprising
• a connection element (10) for indirectly or directly connecting a base (4) to a measurement component (6) for producing and maintaining a measurement connection to a surface to be measured, and
• at least one rotary encoder (9, 9'), which detects the rotation of the at least one connection element (10) with respect to a receptacle (11) and in each case has a code disk embodied as a code carrier (12, 12') and a sensor arrangement (13, 13'), wherein code carrier (12, 12') and sensor arrangement (13, 13') are rotatable with respect to one another about a defined axis of rotation (DA) as a first degree of freedom, and
an evaluation unit (7) for determining the current measurement position of the measuring machine, **characterized in that**
the rotary encoder (9, 9') is configured for determining - in a manner effected from the code projection in the form of a shadow casting of the code disk - and providing at least one position value with regard to at least one of five further degrees of freedom of the three-dimensional position of the code carrier (12, 12') relative to the sensor arrangement (13, 13'), namely
• a deflection of the code carrier (12, 12') in a radial direction relative to the axis of rotation (DA),
• a deflection of the code carrier (12, 12') in the direction of the axis of rotation (DA) and
• a tilting of the code carrier (12, 12') with respect to the axis of rotation (DA),
and the evaluation unit is configured for determining the current measurement position taking into account the position value as an additional measurement variable, which describes the relative position of the connection element (10) with respect to the receptacle (11), wherein the position value can be used to determine a relative position - corresponding to the at least one further degree of freedom of the code carrier (12, 12') - of the connection element (10) with respect to the receptacle (11)
and wherein rotational position, deflection and tilting and thus the position of the code carrier (12, 12') relative to the sensor arrangement (13, 13') in all six degrees of freedom are determined for the at least one rotary encoder (9, 9'), wherefore the three-dimensional position of the code carrier (12, 12') with respect to the sensor arrangement (13, 13') is read from the shadow casting.

7. The connection arrangement as claimed in claim 6,
**characterized in that**
the sensor arrangement (13, 13') of the rotary encoder (9, 9') has at least two read heads arranged in a manner 180° offset with respect to one another in a circumferential direction, in particular has four read heads arranged in a manner offset in each case by 90° with respect to one another in a circumferential direction.

8. The connection arrangement as claimed in claim 6,
**characterized in that**
the sensor arrangement (13, 13') of the rotary encoder (9, 9') has three read heads arranged in a manner offset in each case by 120° in a circumferential direction.

9. The connection arrangement as claimed in claim 6,
**characterized in that**
the sensor arrangement (13, 13') of the rotary encoder (9, 9') has at least four read heads arranged in a manner offset at different angles with respect to one another in a circumferential direction.

10. The connection arrangement as claimed in any one of claims 6 to 9,
**characterized in that**
the rotary encoder (9, 9') has at least two code carriers (12, 12'), which are rotatable about the same, in particular on a common, axis of rotation (DA) and are arranged at a distance from one another, wherein the two code carriers (12, 12') are respectively assigned a sensor arrangement (13, 13') composed of at least two read heads which respectively detect a code element projection and are arranged opposite one another.

11. The connection arrangement as claimed in any one of claims 6 to 10,
**characterized in that**
the code carrier (12, 12') has a plurality of pattern elements (14, 14') as code and the sensor arrangement (13, 13') resolves projected positions of a plurality of pattern elements (14, 14') of the code projection, wherein the at least one position value is determined computationally on the basis of
• a position of at least one of the pattern elements (14, 14'),
• a ratio of positions of a plurality of the pattern elements (14, 14') with respect to one another,
• a sequence of positions of a plurality of pattern elements (14, 14') arranged one behind another.

12. A coordinate measuring machine (1) comprising an articulated arm for determining a measurement position, wherein the articulated arm has a first end as base (4), a second end having a measurement component (6) for producing and maintaining a contact-connecting or contactless, in particular optical, measurement connection to a surface to be measured, and at least two arm elements, which are embodied as connection arrangements (10) as claimed in any one of claims 6 to 11.

13. The coordinate measuring machine (1) as claimed in claim 12,
**characterized in that**
the measurement position is determined exclusively on the basis of the rotational positions and position values of the rotary encoders (9, 9') of the connection arrangements (10).

## Revendications

1. Procédé de mesure pour une machine à mesurer les surfaces, notamment une machine à mesurer les coordonnées (1), comprenant :
- une base (4),
- un composant de mesure (6) destiné à établir et à maintenir une liaison de mesure avec ou sans contact, notamment optique, avec une surface à mesurer, le composant de mesure (6) étant lié à la base (4) par au moins un élément de liaison (10),
- au moins un codeur rotatif (9, 9') qui capte la rotation de l'au moins un élément de liaison (10) par rapport à une monture (11) et qui présente respectivement un support de code (12, 12') sous forme d'un disque de code et un agencement de capteur (13, 13'), le support de code et l'agencement de capteur pouvant tourner l'un par rapport à l'autre sur un axe de rotation (DA) défini, selon un premier degré de liberté,
ledit procédé comprenant :
• l'obtention d'une projection de code sous forme d'une ombre portée dudit disque de code sur l'agencement de capteur (13, 13'), ladite projection dépendant de la position tridimensionnelle du support de code (12, 12') relativement à l'agencement de capteur (13, 13'), et la détection d'au moins une partie de la projection de code,
• la détermination d'une position de rotation du support de code (12, 12') autour de l'axe de rotation (DA) compte tenu de la projection de code,
• la détermination de la position de mesure actuelle du composant de mesure (6) relativement à la base (4), en utilisant la position de rotation de l'au moins un codeur rotatif (9, 9'),
**caractérisé en ce que**
pour l'au moins un codeur rotatif (9, 9') et compte tenu de la projection de code, une valeur de position est déterminée pour au moins un degré de liberté supplémentaire du support de code (12, 12') relativement à l'agencement de capteur (13, 13'), et est prise en compte lors du calcul de la position de mesure actuelle en tant que grandeur de mesure supplémentaire qui fournit une position relative de l'élément de liaison (10) par rapport à la monture (11),
la position relative de l'élément de liaison (10) par rapport à la monture (11), correspondant à l'au moins un degré de liberté supplémentaire du support de code (12, 12'), étant déterminée à partir de la valeur de position,
sachant que
• une déviation du support de code (12, 12') à partir d'une position de repos,
∘ en direction radiale relativement à l'axe de rotation (DA) et
∘ en direction de l'axe de rotation (DA) et
• un basculement du support de code (12, 12') à partir d'une position de repos relativement à l'agencement de capteur (13, 13'),
sont déterminés en tant que valeur de position et pour l'au moins un codeur rotatif (9, 9'), une position de rotation, une déviation et un basculement, et donc la position du support de code (12, 12'), sont déterminés relativement à l'agencement de capteur (13, 13') selon la totalité des six degrés de liberté, la position tridimensionnelle du support de code (12, 12') par rapport à l'agencement de capteur (13, 13') étant lue à cette fin sur ladite ombre portée.

2. Procédé de mesure selon l'une des revendications précédentes,
**caractérisé en ce que**
pour l'au moins un codeur rotatif (9, 9'), il est effectué une division en parties conditionnées par la déformation et par la position relative, compte tenu de l'orientation d'un autre élément de liaison lié à la monture (11).

3. Procédé de mesure selon l'une des revendications précédentes,
**caractérisé en ce que**
pour au moins un deuxième codeur rotatif (9'), sa position de rotation et sa valeur de position sont déterminées et prises en compte lors de la détermination de la position dans l'espace du composant de mesure (6).

4. Procédé de mesure selon la revendication 3,
**caractérisé en ce que**
la position de mesure est déterminée compte tenu de la position dans l'espace des éléments de liaison établie exclusivement à partir des positions de rotation et des valeurs de position des au moins deux codeurs rotatifs (9, 9').

5. Procédé de mesure selon l'une des revendications précédentes,
**caractérisé en ce que**
le codeur rotatif (9, 9') présente au moins deux supports de code (12, 12') qui peuvent tourner sur le même axe de rotation, notamment un axe de rotation commun, et qui sont disposés à distance l'un de l'autre, une valeur de position étant déterminée pour chacun des supports de code (12, 12') compte tenu de la projection de code respective, une position relative de l'élément de liaison (10) par rapport à la monture (11), correspondant notamment au degré de liberté supplémentaire du support de code (12, 12'), et/ou la déformation de l'élément de liaison (10) étant déterminées à partir de la combinaison des valeurs de position des deux supports de code (12, 12').

6. Agencement de liaison, notamment de liaison de basculement ou de rotation, pour une machine à mesurer, notamment dotée d'un bras articulé, comprenant :
• un élément de liaison (10) pour lier indirectement ou directement une base (4) à un composant de mesure (6) destiné à établir et à maintenir une liaison de mesure avec une surface à mesurer,
• au moins un codeur rotatif (9, 9') qui capte la rotation de l'au moins un élément de liaison (10) par rapport à une monture (11) et qui présente respectivement un support de code (12, 12') sous forme d'un disque de code et un agencement de capteur (13, 13'), le support de code (12, 12') et l'agencement de capteur (13, 13') pouvant tourner l'un par rapport à l'autre sur un axe de rotation (DA) défini, selon un premier degré de liberté, et
• une unité d'évaluation (7) destinée à déterminer la
position de mesure actuelle de la machine à mesurer, **caractérisé en ce que**
le codeur rotatif (9, 9') est conçu pour déterminer et fournir, à partir de la projection de code sous forme d'une ombre portée du disque de code, au moins une valeur de position concernant au moins un des cinq degrés de liberté supplémentaires de la position tridimensionnelle du support de code (12, 12') relativement à l'agencement de capteur (13, 13'), à savoir :
• une déviation du support de code (12, 12') en direction radiale relativement à l'axe de rotation (DA),
• une déviation du support de code (12, 12') en direction de l'axe de rotation (DA) et
• un basculement du support de code (12, 12') par rapport à l'axe de rotation (DA),
et l'unité d'évaluation (7) est conçue pour calculer la position de mesure actuelle en tenant compte de la valeur de position en tant que grandeur de mesure supplémentaire qui fournit une position relative de l'élément de liaison (10) par rapport à la monture (11), la position relative de l'élément de liaison (10) par rapport à la monture (11), correspondant à l'au moins un degré de liberté supplémentaire du support de code (12, 12'), pouvant être déterminée à partir de la valeur de position,
sachant que pour l'au moins un codeur rotatif (9, 9'), une position de rotation, une déviation et un basculement, et donc la position du support de code (12, 12'), sont déterminés relativement à l'agencement de capteur (13, 13') selon la totalité des six degrés de liberté, la position tridimensionnelle du support de code (12, 12') par rapport à l'agencement de capteur (13, 13') étant lue à cette fin sur ladite ombre portée.

7. Agencement de liaison selon la revendication 6,
**caractérisé en ce que**
l'agencement de capteur (13, 13') du codeur rotatif (9, 9') présente au moins deux têtes de lecture disposées dans la direction circonférentielle avec un décalage mutuel de 180°, notamment quatre têtes de lecture disposées dans la direction circonférentielle avec un décalage mutuel de 90°.

8. Agencement de liaison selon la revendication 6,
**caractérisé en ce que**
l'agencement de capteur (13, 13') du codeur rotatif (9, 9') présente trois têtes de lecture disposées dans la direction circonférentielle avec un décalage mutuel de 120°.

9. Agencement de liaison selon la revendication 6,
**caractérisé en ce que**
l'agencement de capteur (13, 13') du codeur rotatif (9, 9') présente au moins quatre têtes de lecture disposées dans la direction circonférentielle avec différents décalages angulaires mutuels.

10. Agencement de liaison selon l'une des revendications 6 à 9,
**caractérisé en ce que**
le codeur rotatif (9, 9') présente au moins deux supports de code (12, 12') qui peuvent tourner sur le même axe de rotation, notamment un axe de rotation (DA) commun, et qui sont disposés à distance l'un de l'autre, un agencement de capteur (13, 13') composé d'au moins deux têtes de lecture disposées à l'opposé l'une de l'autre et captant chacune une projection d'élément de code étant attribué à chacun des deux supports de code (12, 12').

11. Agencement de liaison selon l'une des revendications 6 à 10,
**caractérisé en ce que**
le support de code (12, 12') présente plusieurs éléments de motif (14, 14') en tant que code, et l'agencement de capteur (13, 13') résout les positions projetées de plusieurs éléments de motif (14, 14') de la projection de code, l'au moins une valeur de position étant déterminée par calcul compte tenu :
• de la position d'au moins un des éléments de motif (14, 14'),
• du rapport de la position de plusieurs des éléments de motif (14, 14') entre eux,
• d'une séquence de position de plusieurs éléments de motif (14, 14') consécutifs.

12. Machine à mesurer les coordonnées (1) dotée d'un bras articulé, destinée à déterminer une position de mesure, le bras articulé présentant une première extrémité servant de base (4), une deuxième extrémité dotée d'un composant de mesure (6) destiné à établir et à maintenir une liaison de mesure avec ou sans contact, notamment optique, avec une surface à mesurer, et au moins deux éléments de bras formés en tant qu'agencements de liaison (10) selon l'une des revendications 6 à 11.

13. Machine à mesurer les coordonnées (1) selon la revendication 12,
**caractérisée en ce que**
la position de mesure est déterminée exclusivement compte tenu des positions de rotation et des valeurs de position du codeur rotatif (9, 9') des agencements de liaison (10).
